# EUROPÄISCHE PATENTSCHRIFT

(11) **EP 4 194 713 B1**
(45) Veröffentlichungstag und Bekanntmachung des Hinweises auf die Patenterteilung: **28.08.2024**
(21) Anmeldenummer: 22211931.5
(22) Anmeldetag: 07.12.2022
(51) Int. Cl.: F16D 55/40, F16D 59/02, F16D 127/04, F16D 121/16

(54) **LAMELLENBREMSE FÜR EIN KRAFTFAHRZEUG**
MULTIPLE DISC BRAKE FOR A MOTOR VEHICLE
FREIN MULTIDISQUE POUR VÉHICULE AUTOMOBILE

(30) Priorität: 07.12.2021 DE 102021213894
(43) Veröffentlichungstag der Anmeldung: 14.06.2023
(73) Patentinhaber: ZF Friedrichshafen AG, 88046 Friedrichshafen (DE)
(72) Erfinder: Feuchtner, Norbert, 94107 Untergriesbach (DE); Potasch, Gunar, 94127 Neuburg am Inn (DE); Greil, Erwin, 93161 Sinzing (DE)

(56) Entgegenhaltungen:
- US-A- 4 540 073
- US-B1- 6 321 882
- US-B1- 6 585 088

## Beschreibung

Die Erfindung bezieht sich auf eine Lamellenbremse für ein Kraftfahrzeug, mit einem in einer Lamellenkammer eines Bremsgehäuses auf einem Achskörper angeordneten Lamellenpaket mit zumindest einer Bremslamelle, mit einer Feder, durch die zum Schließen der Lamellenbremse das Lamellenpaket zusammendrückbar ist und mit einem an der Feder anliegenden und in einem Zylinderraum verschiebbar angeordneten Kolben, der zum Lösen der Lamellenbremse gegen die Kraft der Feder mit einem Druck beaufschlagbar ist und über den das Lamellenpaket direkt oder indirekt durch die Feder zusammendrückbar ist, mit einer mechanischen Notlösevorrichtung, durch die der Kolben zum Lösen der Lamellenbremse gegen die Kraft der Feder beaufschlagbar ist.

Bei derartigen Lamellenbremsen mit einer Notlösevorrichtung ist es bekannt, daß die Notlöseeinrichtungen zu ihrer Betätigung axial oder radial zugänglich sind. Dies erfordert radial oder axial einen erheblichen Betätigungsraum um die Notlöseeinrichtung betätigen zu können, wodurch der gesamte erforderliche Bauraum der Lamellenbremse sehr groß sein muß.

Dokument US4540073 offenbart eine Radnabe mit Untersetzungsgetriebe und integrierter Bremse.

Aufgabe der Erfindung ist es daher eine Lamellenbremse für ein Kraftfahrzeug mit einer Notlösevorrichtung der eingangs genannten Art zu schaffen, die einen einfachen Aufbau und einen geringen Bauraumbedarf sowie eine gute Zugänglichkeit zur Lösevorrichtung aufweist.

Diese Aufgabe wird erfindungsgemäß dadurch gelöst, daß im Bremsgehäuse eine Ausnehmung ausgebildet ist, die sich unter einem Winkel <90° zum Achskörper geneigt von der radial äußeren Mantelfläche des Bremsgehäuses zum Zylinderraum erstreckt und an dessen dem Lamellenpaket näheren Stirnwand in den Zylinderraum mündet, wobei in der Ausnehmung ein Stellbolzen angeordnet ist, der mit seinem zylinderraumseitigen Ende zwischen einer in den Zylinderraum ragenden und einer nicht in den Zylinderraum ragenden Position in der Ausnehmung verstellbar ist.

Die Lamellenbremse ist vorzugsweise eine Parkbremse, die in allen Fahrzeugtypen angewendet werden kann.

Der Winkel, unter dem die Ausnehmung zum Achskörper geneigt sich erstreckt, beträgt vorzugsweise zwischen 15° und 60°, insbesondere 30°.

Zu eine Notlösung der Lamellenbremse wird der Stellbolzen in den Zylinderraum hineinbewegt und kommt dort zur Anlage an dem Kolben, wobei bei weiterer Hineinbewegung des Stellbolzens der Kolben in Löserichtung der Lamellenbremse gegen die Kraft der Feder verschoben wird und so die Lamellenbremse gelöst wird.

Dabei kann die Lamellenbremse eine Parkbremse sein, die insbesondere eine sog. nasse Lamellenbremse ist.

Die Ausnehmung ist dabei vorzugsweise zu einem stirnseitigen Ende des Bremsgehäuses hin geneigt, da dort ausreichender Raum zum Betätigen der Notlöseeinrichtung vorhanden ist.

Der Stellbolzen kann vollständig in der Ausnehmung angeordnet sein und damit nicht über die radial äußere Mantelfläche hervorragen.

Dies führt dazu, daß eine große Eigensicherheit gegen ungewollte Aktivierung der Notlösevorrichtung vorhanden ist.

Durch die Anordnung der Notlösevorrichtung innerhalb des sowieso vorhandenen Bremsgehäuses ist keine Vergrößerung der Lamellenbremse und damit eine Vergrößerung des erforderlichen Bauraums nötig.

In einfacher Ausbildung kann die Ausnehmung eine Gewindebohrung und der Stellbolzen ein Gewindebolzen sein, so daß keine aufwendige Mechanik zum Bewegen des Stellbolzens erforderlich ist.

Weist das der radial äußeren Mantelfläche des Bremsgehäuses zugewandte Ende des Stellbolzens eine Werkzeugangriffskontur zur Aufnahme eines Drehwerkzeugs zum Verdrehen des Gewindebolzens auf, so werden permanent vorhandene und Bauraum benötigende Betätigungsorgane vermieden.

Zum Schutz gegen Verschmutzung und gegen ungewollte Aktivierung der Notlösevorrichtung kann das der radial äußeren Mantelfläche des Bremsgehäuses zugewandte Ende der Ausnehmung von einem Verschlußelement verschließbar sein.

Ebenfalls zum Schutz gegen Verschmutzung sowie zur Druckabdichtung des Zylinderraums kann der Stellbolzen abgedichtet in der Ausnehmung verstellbar sein.

Der Stellbolzen kann zweiteilig ausgebildet sein und aus einem in der Ausnehmung axial geführten Führungsteil und einem Druckstück bestehen, wobei das Druckstück an dem dem Zylinderraum zugewandten Endbereich des Führungsteils angeordnet ist.

Ist das Druckstück um die Längsachse der Ausnehmung relativ verdrehbar mit dem Führungsteil verbunden, so verdreht sich bei Anlage des Druckstücks am Kolben das Druckstück nicht mehr, während der Stellbolzen mit dem Führungsteil verdreht werden kann.

In einfach zu montierender Ausbildung kann dazui das Druckstück mittels eines Bajonettverschlusses mit dem Führungsteil verbunden sein.

Ist das Druckstück bei betätigter Notlösevorrichtung mit einem Teilumfangsbereich seines Übergangs zwischen seiner dem Kolben zugewandten Stirnseite und seiner zylindrischen Mantelfläche an dem Kolben und mit seiner dem Teilumfangsbereich diametral gegenüberliegenden Bereich seiner zylindrischen Mantelfläche an der Innenwand der Ausnehmung in Anlage, so wird das Druckstück gegen ein Verdrehen gesichert gehalten, wodurch ein Verschleiß an Kolben und Druckstück weitgehend vermieden wird.

Ist dabei das Druckstück aus einem verschleißarmen und/oder zum Werkstoff des Kolbens reibungsarmen Werkstoff ausgebildet, so kommt es ebenfalls zu keinem wesentlichen Verschleiß an Druckstück und/oder Kolben.

Ist die Feder eine Tellerfeder, so wird eine besonders axial kurze Baugröße der Lamellenbremse erreicht.

Zur sicheren Normallösung der Lamellenbremse ist der Kolben vorzugsweise von einem Hydraulikdruck beaufschlagbar.

Von dem von der Feder belasteten Kolben kann über einen in einem Betriebszylinder verschiebbar angeordneten Betriebsbremskolben das Lamellenpaket zusammendrückbar beaufschlagbar sein.

Insbesondere, wenn die Lamellenbremse eine nasse Lamellenbremse ist, kann dabei der Zylinderraum des Kolbens und der Betriebszylinder des Betriebsbremskolbens durch eine Trennwand voneinander getrennt sein, die ein oder mehrere axial durchgehende Axialöffnungen aufweist, durch die Druckstücke des Kolbens gleicher Querschnittskontur abgedichtet hindurchgeführt sind, durch die der Betriebsbremskolben von dem Kolben in Schließrichtung des Lamellenpakets beaufschlagbar ist.

Ein Ausführungsbeispiel der Erfindung ist in der Zeichnung dargestellt und wird im Folgenden näher beschrieben. Es zeigen:
- Figur 1: einen Längsschnitt eines Ausschnitts einer Lamellenbremse bei nichtbetätigter Notlösevorrichtung
- Figur 2: einen Längsschnitt eines Ausschnitts der Lamellenbremse nach Figur 1 bei betätigter Notlösevorrichtung

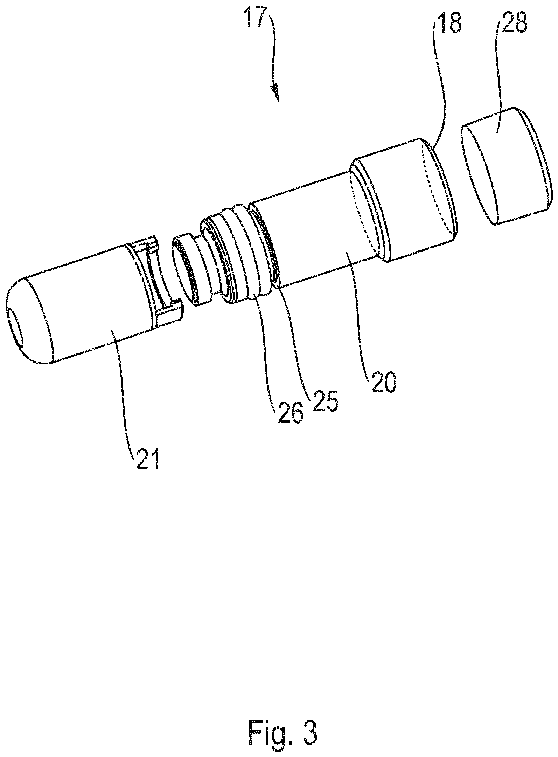

- Figur 3: eine perspektivische Darstellung eines Stellbolzens der Lamellenbremse nach Figur 1.

Die dargestellte Lamellenbremse eines Fahrzeugs weist ein mehrteiliges Bremsgehäuse 1 auf, in dem eine abgedichtete und ein Öl enthaltende Lamellenkammer 2 angeordnet ist. In die Lamellenkammer 2 ragt koaxial ein nicht dargestellter drehbar gelagerter Achskörper, auf dem ein Lamellenpaket 4 mit mehreren Bremslamellen 5, 5' nebeneinander angeordnet ist. Jeweils axial zwischen zwei mit dem Achskörper drehfest verbundenen Bremslamellen 5 ist eine Bremslamelle 5' angeordnet, die drehfest mit dem Bremsgehäuse 1 verbunden ist.

In dem Bremsgehäuse 1 ist ein Betriebszylinder 6 axial zur Lamellenkammer 2 ausgebildet, in dem ein Betriebsbremskolben 7 abgedichtet axial verschiebbar angeordnet ist.

Von einer Trennwand 8 des Bremsgehäuses 1 getrennt ist koaxial zum Betriebszylinder 6 in einem Zylinderraum 9 des Bremsgehäuses 1 ein Kolben 10 abgedichtet axial verschiebbar geführt angeordnet, der über eine nicht dargestellte Druckleitung auf seiner dem Lamellenpaket 4 zugewandten Stirnseite von einem hydraulischen Druck beaufschlagbar ist.

Die Trennwand 8 weist mehrere axial durchgehende Axialöffnungen auf, durch die Druckstücke 13 des Kolbens 10 abgedichtet hindurchgeführt sind und axial an dem Betriebsbremskolben 7 anliegen.

An der dem Lamellenpaket 4 abgewandten Stirnseite der Kolbens 10 liegt eine an einem Anschlag 12 des Bremsgehäuses 1 abgestützte vorgespannte Tellerfeder 11 an, von der der Kolben 10 bei Nichtdruckbeaufschlagung des Zylinderraums 9 zum Lamellenpaket 4 hin bewegt wird und über die Druckstücke 13 den Betriebsbremszylinderkolben gegen das Lamellenpaket preßt. Dadurch werden die Bremslamellen 5 und 5' aneinandergepreßt und damit eine Drehbewegung des Achskörpers unterbunden.

Erfolgt dann eine Druckbeaufschlagung des Zylinderraums 9, so bewegt sich der Kolben 10 entgegen der Kraft der Tellerfeder 11 vom Lamellenpaket 4 weg, so daß die Bremslamellen 5 nicht mehr mit den Bremslamellen 5' zusammengepreßt sind und damit der Achskörper frei drehen kann.

Käme es zu einem Defekt dieses Lösevorgangs, so würde sich der Kolben 10 nicht entgegen der Kraft der Tellerfeder 11 vom Lamellenpaket 4 wegbewegen und die Lamellenbremse bliebe in ihrem geschlossenen Zustand.

Um in einer solchen Situation trotzdem die Lamellenbremse lösen zu können, ist eine Notlösevorrichtung 14 vorhanden.

Dazu ist im Bremsgehäuse 1 eine Ausnehmung als Bohrung 30 ausgebildet, die sich unter einem Winkel von 30° zum Achskörper von der radial äußeren umlaufenden Mantelfläche 16 des Bremsgehäuses zum Zylinderraum 9 erstreckt und in dessen dem Lamellenpaket 4 näheren Stirnwand 19 in den Zylinderraum 9 mündet. Die Bohrung 30 ist nur in ihrem dem Zylinderraum 9 entfernteren Bereich als Gewindebohrung 15 mit Gewinde 27 versehen und weist in ihrem davon zum Zylinderraum 9 sich erstreckenden Bereich einen dem Kernlochdurchmesser des Gewindes 27 entsprechenden Durchmesser auf.

In die Gewindebohrung 15 ist ein Gewindebolzen 17 so weit eingeschraubt, daß zwischen stirnseitigen äußeren Ende 18 des Gewindebolzens 17 und dem äußeren Ende der Gewindebohrung 15 ein ein bestimmtes Einstellmaß bildender Abstand vorhanden ist. Dabei weist der Gewindebolzen 17 auch nur ein Gewinde in seinem nach außen gerichteten Endbereich auf, mit dem er in das Gewinde 27 der Gewindebohrung 15 eingeschraubt ist. Der dem Zylinderraum 9 zugewandte gewindefreie Bereich des Gewindebolzens 17 weist einen dem Kernlochdurchmesser des Gewindes 27 entsprechenden Durchmesser auf, so daß der Gewindebolzen 17 in diesem Bereich in der Gewindebohrung 15 axial geführt ist.

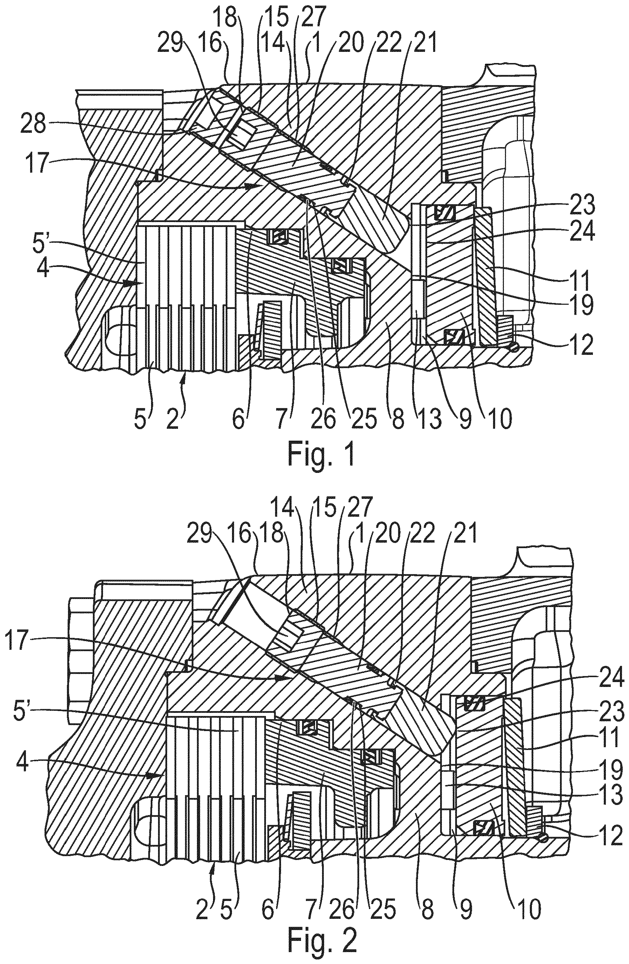

In dieser in Figur 1 dargestellten Lage befindet sich der Gewindebolzen 17 in seiner nicht in den Zylinderraum 9 ragenden Position.

Der Gewindebolzen 17 ist zweiteilig ausgebildet und besteht aus einem mit dem Gewinde versehenen und in die Gewindebohrung 15 eingeschraubten Führungsteil 20 sowie einem dem Zylinderraum 9 näheren Druckstück 21, das in der Bohrung 30 axial verschiebbar geführt ist. Mittels eines Bajonettverschlusses 22 ist das Druckstück 21 koaxial mit dem Führungsteil 20 verbunden und kann sich relativ zum Führungsteil 20 verdrehen.

Das Druckstück 21 besteht aus einem Material höherer Festigkeit als der Kolben 10 und weist an seinem dem Zylinderraum 9 zugewandten Ende einen radial umlaufenden Radius 23 auf.

Anstatt eines Radius 23 könnte auch eine Fase ausgebildet sein.

Durch das Material höherer Festigkeit des Druckstücks 21 findet eine gewollte Brinellierung des Anlagebereichs des Kolbens 10 statt, die jedoch unschädlich radial außerhalb der Funktionsflächen des Kolbens 10 liegt. Eine Verformung des Druckstücks 21 erfolgt nicht.

Damit der Gewindebolzen 17 sich durch z.B. Erschütterungen während des Fahrbetriebs nicht selbsttätig verdrehen kann, weist das Führungsteil 20 in seinem gewindefreien Bereich eine radial umlaufende Ringnut 25 an seiner Mantelfläche auf, in der zwei Dichtringe 26 aus einem elastischen Material angeordnet sind, die mit Vorspannung sowohl an dem Boden der Ringnut 25 als auch an der gewindefreien Wandung der Gewindebohrung 15 in Anlage ist.

Das der radial äußeren Mantelfläche 16 des Bremsgehäuses 1 zugewandte Ende der Gewindebohrung 15 ist durch ein Verschlußelement 28 verschließbar. Dazu weist das als Verschlußschraube ausgebildete Verschlußelement 28 ein Gewinde auf, mit dem es in die Gewindebohrung 15 eingeschraubt ist. Durch diese leicht konische Ausbildung des Verschlußelements ist die Gewindebohrung 15 gegen Leckage nach außen und vor Verschmutzung nach innen abgeschottet.

Das Verschlußstück hat weiterhin die Funktion den Gewindebolzen 17 vor unbefugtem Zugriff zu schützen bzw. eine versehendliche Bedienung zu vermeiden.

Während des Fahrbetriebs des Fahrzeugs ist der Zylinderraum 9 permanent mit einem Druck beaufschlagt, so daß der Kolben 10 gegen die Kraft der Tellerfeder 11 in seine dem Lamellenpaket 4 entferntere Lage gehalten und somit die Lamellenbremse geöffnet ist.

Ist dies in einem Notfall nicht der Fall und der Zylinderraum 9 trotz beabsichtigtem Fahrbetrieb drucklos, so kann das Verschlußelement 28 entfernt und mittels eines Sechskantschlüssels der Gewindebolzen 17 weiter in die Gewindebohrung 15 eingeschraubt werden. Dazu weist die äußere Stirnseite des Gewindebolzens 17 einen Innensechskant 29 auf, in den der Sechskantschlüssel eingeführt und der Gewindebolzen 17 verdreht werden kann.

Ein Notfall kann auch darin bestehen, daß kein Druck zur Beaufschlagung des Kolbens 10 aufgebaut werden kann, weil z.B. der Motor des Fahrzeugs defekt ist oder aus anderen Gründen nicht zum Druckaufbau benutzt werden kann.

Dabei wird der Gewindebolzen 17 so weit in die Gewindebohrung 15 hineinbewegt, daß das Druckstück 21 in eine in den Zylinderraum 9 ragende Position hineinbewegt wird, an dem Kolben 10 mit einem Teilumfangsbereich 31 des umlaufenden Radius 23 zur Anlage kommt und bei weiterem Verdrehen des Gewindebolzens 17 diesen gegen die Kraft der Tellerfeder 11 von dem Lamellenpaket 4 wegbewegt. Dabei löst sich auch die Lamellenbremse und das Fahrzeug kann in eine Werkstatt bewegt werden.

Als Reaktion zur Anlage des Teilumfangsbereichs 31 des Radius 23 an dem Kolben 10 stützt sich das Druckstück 21 mit dem dem Teilumfangsbereich 31 diametral gegenüberliegenden Bereich seiner Mantelfläche 32 an der Innenwand der Bohrung 30 ab. Dabei ist die Summe der Reibmomente, mit denen das Druckstück 21 an dem Kolben 10 und an der Innenwand der Bohrung 30 anliegt, größer als das Reibmoment zwischen dem Führungsteil 20 und dem Druckstück 21.

Damit ist das Führungsteil 20 sowohl rotatorisch als auch translatorisch bewegbar, während das an dem Kolben 10 anliegende Druckstück 21 nur translatorisch bewegbar ist.

### Bezugszeichen

- 1: Bremsgehäuse
- 2: Lamellenkammer
- 4: Lamellenpaket
- 5: Bremslamelle
- 5': Bremslamelle
- 6: Betriebszylinder
- 7: Betriebsbremskolben
- 8: Trennwand
- 9: Zylinderraum
- 10: Kolben
- 11: Tellerfeder
- 12: Anschlag
- 13: Druckstück
- 14: Notlösevorrichtung
- 15: Gewindebohrung
- 16: Mantelfläche
- 17: Gewindebolzen
- 18: äußeres Ende
- 19: Stirnwand
- 20: Führungsteil
- 21: Druckstück
- 22: Bajonettverschluß
- 23: Radius
- 24: Kolbenstirnwand
- 25: Ringnut
- 26: Dichtringe
- 27: Gewinde
- 28: Verschluß
- 29: Innensechskant
- 30: Bohrung
- 31: Teilumfangsbereich
- 32: Mantelfläche

## Patentansprüche

1. Lamellenbremse für ein Kraftfahrzeug, mit einem in einer Lamellenkammer (2) eines Bremsgehäuses (1) auf einem Achskörper angeordneten Lamellenpaket (4) mit zumindest einer Bremslamelle (5, 5'), mit einer Feder (11), durch die zum Schließen der Lamellenbremse das Lamellenpaket (4) zusammendrückbar ist und mit einem an der Feder (11) anliegenden und in einem Zylinderraum (9) verschiebbar angeordneten Kolben (10), der zum Lösen der Lamellenbremse gegen die Kraft der Feder (11) mit einem Druck beaufschlagbar ist und über den das Lamellenpaket (4) direkt oder indirekt durch die Feder (11) zusammendrückbar ist, mit einer mechanischen Notlösevorrichtung (14), durch die der Kolben (10) zum Lösen der Lamellenbremse gegen die Kraft der Feder beaufschlagbar ist, **dadurch gekennzeichnet, daß** im Bremsgehäuse (1) eine Ausnehmung (30) ausgebildet ist, die sich unter einem Winkel <90° zum Achskörper geneigt von der radial äußeren Mantelfläche (16) des Bremsgehäuses (1) zum Zylinderraum (9) erstreckt und an dessen dem Lamellenpaket (4) näheren Stirnwand (19) in den Zylinderraum (9) mündet, wobei in der Ausnehmung (30) ein Stellbolzen angeordnet ist, der mit seinem zylinderraumseitigen Ende zwischen einer in den Zylinderraum (9) ragenden und einer nicht in den Zylinderraum (9) ragenden Position in der Ausnehmung (30) verstellbar ist.

2. Lamellenbremse nach Anspruch 1, **dadurch gekennzeichnet, dass** die Ausnehmung eine Gewindebohrung (15) und der Stellbolzen ein Gewindebolzen (17) ist.

3. Lamellenbremse nach Anspruch 2, **dadurch gekennzeichnet, dass** das der radial äußeren Mantelfläche (16) des Bremsgehäuses (1) zugewandte Ende des Stellbolzens eine Werkzeugangriffskontur zur Aufnahme eines Drehwerkzeugs zum Verdrehen des Gewindebolzens (17) aufweist.

4. Lamellenbremse nach einem der vorhergehenden Ansprüche, **dadurch gekennzeichnet, dass** das der radial äußeren Mantelfläche (16) des Bremsgehäuses (1) zugewandte Ende der Ausnehmung (30) von einem Verschlußelement (28) verschließbar ist.

5. Lamellenbremse nach einem der vorhergehenden Ansprüche, **dadurch gekennzeichnet, dass** der Stellbolzen abgedichtet in der Ausnehmung (30) verstellbar ist.

6. Lamellenbremse nach einem der vorhergehenden Ansprüche, **dadurch gekennzeichnet, dass** der Stellbolzen zweiteilig ausgebildet ist und aus einem in der Ausnehmung (30) axial geführten Führungsteil (20) und einem Druckstück (21) besteht, wobei das Druckstück (21) an dem dem Zylinderraum (9) zugewandten Endbereich des Führungsteils (20) angeordnet ist.

7. Lamellenbremse nach Anspruch 6, **dadurch gekennzeichnet, dass** das Druckstück (21) um die Längsachse der Ausnehmung (30) relativ verdrehbar mit dem Führungsteil (20) verbunden ist.

8. Lamellenbremse nach einem der Ansprüche 6 und 7, **dadurch gekennzeichnet, dass** das Druckstück (21) mittels eines Bajonettverschlusses (22) mit dem Führungsteil (20) verbindbar ist.

9. Lamellenbremse nach einem der Ansprüche 7 und 8, **dadurch gekennzeichnet, dass** das Druckstück (21) bei betätigter Notlösevorrichtung mit einem Teilumfangsbereich (31) seines Übergangs zwischen seiner dem Kolben (10) zugewandten Stirnseite und seiner zylindrischen Mantelfläche (32) an dem Kolben (10) und mit seiner dem Teilumfangsbereich (31) diametral gegenüberliegenden Bereich seiner zylindrischen Mantelfläche (32) an der Innenwand der Ausnehmung (30) in Anlage ist.

10. Lamellenbremse nach Anspruch 6, **dadurch gekennzeichnet, dass** das Druckstück (21) aus einem verschleißarmen und/oder zum Werkstoff des Kolbens (10) reibungsarmen Werkstoff ausgebildet ist.

11. Lamellenbremse nach einem der vorhergehenden Ansprüche, **dadurch gekennzeichnet, dass** die Feder eine Tellerfeder (11) ist.

12. Lamellenbremse nach einem der vorhergehenden Ansprüche, **dadurch gekennzeichnet, dass** der Kolben (10) von einem Hydraulikdruck beaufschlagbar ist.

13. Lamellenbremse nach einem der vorhergehenden Ansprüche, **dadurch gekennzeichnet, dass** von dem von der Feder belasteten Kolben (10) über einen in einem Betriebszylinder (6) verschiebbar angeordneten Betriebsbremskolben (7) das Lamellenpaket (4) zusammendrückbar beaufschlagbar ist.

14. Lamellenbremse nach Anspruch 13, **dadurch gekennzeichnet, dass** der Zylinderraum (9) des Kolbens (10) und der Betriebszylinder (6) des Betriebsbremskolbens (7) durch eine Trennwand (8) voneinander getrennt sind, die ein oder mehrere axial durchgehende Axialöffnungen aufweist, durch die Druckstücke (13) des Kolbens (10) gleicher Querschnittskontur abgedichtet hindurchgeführt sind, durch die der Betriebsbremskolben (7) von dem Kolben (10) in Schließrichtung des Lamellenpakets (4) beaufschlagbar ist.

## Claims

1. Multiple disc brake for a motor vehicle, with a disc pack (4) arranged in a disc chamber (2) of a brake housing (1) on an axle body with at least one brake disc (5, 5'), with a spring (11), by which, in order to close the multiple disc brake, the disc pack (4) is compressible and with a piston (10) which bears against the spring (11) and is arranged displaceably in a cylinder space (9), which piston (10), in order to release the multiple disc brake, can be acted upon with a pressure counter to the force of the spring (11) and via which the disc pack (4) is compressible directly or indirectly by the spring (11), with a mechanical emergency release device (14), by which the piston (10), in order to release the multiple disc brake, can be acted upon counter to the force of the spring, **characterized in that** a recess (30) is formed in the brake housing (1), which recess (30) extends inclined at an angle <90° to the axle body from the radially outer shell surface (16) of the brake housing (1) to the cylinder space (9) and opens into the cylinder space (9) on its end wall (19) closest to the disc pack (4), wherein an adjusting bolt is arranged in the recess (30), which adjusting bolt is adjustable with its cylinder room-side end between a position protruding into the cylinder space (9) and a position not protruding into the cylinder space (9) in the recess (30).

2. Multiple disc brake according to Claim 1, **characterized in that** the recess is a threaded bore (15) and the adjusting bolt is a threaded bolt (17).

3. Multiple disc brake according to Claim 2, **characterized in that** the end of adjusting bolt facing the radially outer shell surface (16) of the brake housing (1) has a tool engagement contour to receive a rotary tool for rotation of the threaded bolt (17).

4. Multiple disc brake according to any one of the preceding claims, **characterized in that** the end of the recess (30) facing the radially outer shell surface (16) of the brake housing (1) can be closed off by a closure element (28).

5. Multiple disc brake according to any one of the preceding claims, **characterized in that** the adjusting bolt is adjustable in a sealed manner in the recess (30).

6. Multiple disc brake according to any one of the preceding claims, **characterized in that** the adjusting bolt is formed in two parts and is composed of a guide part (20) which is axially guided in the recess (30) and a pressure piece (21), wherein the pressure piece (21) is arranged on the end region of the guide part (20) facing the cylinder space (9).

7. Multiple disc brake according to Claim 6, **characterized in that** the pressure piece (21) is connected to the guide part (2) so as to be relatively rotatable about the longitudinal axis of the recess (30) .

8. Multiple disc brake according to one of Claims 6 and 7, **characterized in that** the pressure piece (21) can be connected to the guide part (20) by means of a bayonet catch (22) .

9. Multiple disc brake according to one of Claims 7 and 8, **characterized in that** the pressure piece (21), in the case of an actuated emergency release device, bears with a partial circumferential region (31) of its transition between its end side facing the piston (10) and its cylindrical shell surface (32) against the piston (10) and with its region, diametrically opposite the partial circumferential region (31), of its cylindrical shell surface (32) against the inner wall of the recess (30).

10. Multiple disc brake according to Claim 6, **characterized in that** the pressure piece (21) is formed from a low-wear material and/or a material which has a low degree of friction with respect to the material of the piston (10) .

11. Multiple disc brake according to any one of the preceding claims, **characterized in that** the spring is a plate spring (11).

12. Multiple disc brake according to any one of the preceding claims, **characterized in that** the piston (10) can be acted upon by a hydraulic pressure.

13. Multiple disc brake according to any one of the preceding claims, **characterized in that** the disc pack (4) can be acted upon in a compressible manner by the piston (10) loaded by the spring via an operating brake piston (7) arranged displaceably in an operating cylinder (6) .

14. Multiple disc brake according to Claim 13, **characterized in that** the cylinder space (9) of the piston (10) and the operating cylinder (6) of the operating brake piston (7) are separated from one another by a separating wall (8) which has one or more axially continuous axial openings through which pressure pieces (13) of the piston (10) with the same cross-sectional contour are guided through in a sealed off manner, through which the operating brake piston (7) can be acted upon by the piston (10) in the closing direction of the disc pack (4).

## Revendications

1. Frein multidisque pour un véhicule automobile, avec un paquet de disques (4) disposé dans une chambre à disques (2) d'un boîtier de frein (1) sur un corps d'essieu, avec au moins un disque de frein (5, 5'), avec un ressort (11),
par lequel le paquet de disques (4) est apte à être comprimé de façon à serrer le frein à disques, et avec un piston (10) s'appuyant sur le ressort (11) et disposé de manière à pouvoir coulisser dans une chambre de cylindre (9), qui est apte à être soumis à une pression pour desserrer le frein multidisque à l'encontre de la force du ressort (11) et par l'intermédiaire duquel le paquet de disques (4) est apte à être comprimé directement ou indirectement par le ressort (11), avec un dispositif mécanique (14) de desserrage d'urgence par lequel le piston (10) est apte à être soumis à une pression pour desserrer le frein multidisque à l'encontre de la force du ressort, **caractérisé en ce que**, dans le boîtier de frein (1), est formé un évidement (30) qui s'étend, incliné selon un angle < 90° par rapport au corps d'essieu, de la surface latérale radialement extérieure (16) du boîtier de frein (1) à la chambre de cylindre (9) et débouche dans la chambre de cylindre (9) sur sa paroi frontale (19) la plus proche du paquet de disques (4), un goujon de réglage étant disposé dans l'évidement (30), lequel est apte à être réglé dans l'évidement (30) avec son extrémité côté chambre de cylindre entre une position faisant saillie dans la chambre de cylindre (9) et une position ne faisant pas saillie dans la chambre de cylindre (9).

2. Frein multidisque selon la revendication 1, **caractérisé en ce que** l'évidement est un trou taraudé (15) et le goujon de réglage est un goujon fileté (17).

3. Frein multidisque selon la revendication 2, **caractérisé en ce que** l'extrémité du goujon de réglage tournée vers la surface latérale radialement extérieure (16) du boîtier de frein (1) présente un contour d'insertion d'outil destiné à recevoir un outil de rotation pour faire tourner le goujon fileté (17).

4. Frein multidisque selon l'une des revendications précédentes, **caractérisé en ce que** l'extrémité de l'évidement (30) tournée vers la surface latérale radialement extérieure (16) du boîtier de frein (1) est apte à être fermée par un élément de fermeture (28).

5. Frein multidisque selon l'une des revendications précédentes, **caractérisé en ce que** le goujon de réglage est réglable de manière étanche dans l'évidement (30).

6. Frein multidisque selon l'une des revendications précédentes, **caractérisé en ce que** le goujon de réglage est réalisé en deux parties et se compose d'une pièce de guidage (20) guidée axialement dans l'évidement (30) et d'une pièce de pression (21), la pièce de pression (21) étant disposée sur la zone d'extrémité de la pièce de guidage (20) tournée vers la chambre de cylindre (9).

7. Frein multidisque selon la revendication 6, **caractérisé en ce que** la pièce de pression (21) est reliée à la pièce de guidage (20) de manière à être apte à relativement tourner autour de l'axe longitudinal de l'évidement (30).

8. Frein multidisque selon l'une des revendications 6 et 7, **caractérisé en ce que** la pièce de pression (21) est apte à être reliée à la pièce de guidage (20) au moyen d'une fermeture à baïonnette (22).

9. Frein multidisque selon l'une des
revendications 7 et 8, **caractérisé en ce que**, lorsque le dispositif de desserrage d'urgence est actionné, la pièce de pression (21) est en appui sur le piston (10) par une zone périphérique partielle (31) de sa transition entre sa face frontale tournée vers le piston (10) et sa surface latérale cylindrique (32), et sur la paroi intérieure de l'évidement (30) par sa zone de sa surface latérale cylindrique (32) diamétralement opposée à la zone périphérique partielle (31).

10. Frein multidisque selon la revendication 6, **caractérisé en ce que** la pièce de pression (21) est réalisée en un matériau à faible usure et/ou à faible frottement par rapport au matériau du piston (10).

11. Frein multidisque selon l'une des revendications précédentes, **caractérisé en ce que** le ressort est une rondelle-ressort (11).

12. Frein multidisque selon l'une des revendications précédentes, **caractérisé en ce que** le piston (10) est apte à être sollicité par une pression hydraulique.

13. Frein multidisque selon l'une des revendications précédentes, **caractérisé en ce que** le piston (10) sollicité par ressort est apte à solliciter le paquet de disques (4) en compression par l'intermédiaire d'un piston de frein (7) de service agencé de manière coulissante dans un cylindre de service (6).

14. Frein multidisque selon la revendication 13, **caractérisé en ce que** la chambre de cylindre (9) du piston (10) et le cylindre de service (6) du piston de frein (7) de service sont séparés l'un de l'autre par une cloison (8) qui présente un ou plusieurs orifices axiaux traversants axialement, à travers lesquels passent de manière étanche des pièces de pression (13) du piston (10) de même contour en section transversale, au moyen desquelles le piston de frein (7) de service est apte à être sollicité par le piston (10) dans le sens du serrage fermeture du paquet de disques (4).
